# EUROPÄISCHE PATENTSCHRIFT

(11) **EP 3 901 379 B1**
(45) Veröffentlichungstag und Bekanntmachung des Hinweises auf die Patenterteilung: **04.10.2023**
(21) Anmeldenummer: 21163415.9
(22) Anmeldetag: 18.03.2021
(51) Int. Cl.: E02F 3/43, B66F 9/20, B66F 9/24, E02F 9/08, E02F 9/12, E02F 9/20

(54) **MOBILE ARBEITSMASCHINE**
MOBILE WORK MACHINE
MACHINE DE TRAVAIL MOBILE

(30) Priorität: 31.03.2020 DE 102020108856
(43) Veröffentlichungstag der Anmeldung: 27.10.2021
(73) Patentinhaber: Liebherr-Hydraulikbagger GmbH, 88457 Kirchdorf an der Iller (DE)
(72) Erfinder: Bayer, Daniel, 89537 Giengen (Brenz) (DE); Asam, Dirk, 89081 Ulm (Söflingen) (DE)
(74) Vertreter: Laufhütte, Dieter

(56) Entgegenhaltungen:
- EP-A1- 1 985 767
- EP-A1- 2 460 941
- US-B2- 10 352 023

## Beschreibung

Die vorliegende Erfindung betrifft eine mobile Arbeitsmaschine, insbesondere eine vollelektrisch betriebene mobile Arbeitsmaschine wie einen Bagger.

Es ist bekannt, dass mobile Arbeitsmaschinen sowohl im Erdbau wie auch zu Zwecken des Materialumschlags verwendet werden können. Ein ganz überwiegender Teil dieser Maschinen ist dabei mit einem herkömmlichen Verbrennungsmotor ausgestattet, der mit fossilen Brennstoffen betrieben wird.

Es gibt jedoch auch sogenannte semistationäre, netzgespeiste Arbeitsmaschinen. Vornehmlich findet diese Technik bei Arbeitsmaschinen Anwendung, die für den Materialumschlag verwendet werden, da diese Tätigkeit auf einer sehr konzentrierten Fläche ausgeübt wird. So wird dafür gesorgt, dass die Arbeitsmaschine in dem erwarteten Tätigkeitsbereich permanent mit einem stationären Stromnetz in Verbindung steht. Dies kann beispielsweise über eine installierte Hochspannungsleitung oder entsprechende äquivalente Vorrichtungen umgesetzt werden. Eine mobile Arbeitsmaschine mit den Merkmalen des Oberbegriffs des Anspruchs 1 ist aus dem US 10 352 023 B2 bekannt.

Nachteilhaft ist, dass bei Auswahl zwischen den oben dargestellten Alternativen immer eine Entscheidung zwischen Mobilität und dem elektrischen Antrieb mit der damit einhergehenden lokalen Emissionsfreiheit zu treffen ist.

Vollelektrische mobile Arbeitsmaschinen haben sich bis dato noch nicht am Markt etablieren können, da die hohen und energieintensiven Arbeitsanforderungen der Arbeitsmaschinen oftmals nicht über einen ausreichend langen Zeitraum bedient werden können. Jedoch wird mit fortschreitender Entwicklung von Energiespeichern und auch aufgrund regulatorischer Anforderungen davon ausgegangen, dass vollelektrische Arbeitsmaschinen zukünftig nachgefragt werden.

Es ist dabei das Ziel der vorliegenden Erfindung eine verbesserte mobile Arbeitsmaschine vorzusehen, die sich zum Einen durch eine möglichst große Reduzierung der benötigten Primärenergiebedarfe auszeichnet und zum anderen eine optimale Anordnung von Energiespeichern zulässt.

Dies gelingt mit einer mobilen Arbeitsmaschine, die sämtliche Merkmale des Anspruchs 1 aufweist. Vorteilhafte Ausgestaltungen der Erfindung sind dabei in den abhängigen Ansprüchen aufgeführt.

Nach der Erfindung ist vorgesehen, dass die mobile Arbeitsmaschine, insbesondere ein Bagger, einen Unterwagen mit einem Ketten-, Schienen oder Radfahrwerk, einen Oberwagen mit einer daran befestigten Arbeitsausrüstung, und einen Drehkranz, der Unterwagen und Oberwagen zueinander rotierbar verbindet, umfasst. Die Arbeitsmaschine ist gekennzeichnet durch eine dezentrale Energieversorgung und/oder ein dezentrales Versorgungsnetz, vorzugsweise ein DC- Versorgungsnetz (DC- BUS), und einen Schleifring zum Übertragen von elektrischer Energie zwischen Oberwagen und Unterwagen.

Durch das Vorsehen des Schleifrings ist es demnach möglich, Energiespeicher und Antriebssysteme nicht lediglich auf den Oberwagen zu beschränken, da durch das Durchführen der Energie durch den Schleifring nun auch am Unterwagen angeordnete Komponenten mit einbezogen werden können. So ist es nun bspw. möglich, dezentrale Energiespeicher vorzusehen, die sowohl am Oberwagen als auch am Unterwagen angeordnet sein können.

Bspw. kann mit der erfindungsgemäßen Idee das Versorgungsnetz auch im Unterwagen fortgeführt werden, so dass auch dort diverse Komponenten und Antriebssysteme mit Energie versorgt werden können.

So kann nach der Erfindung vorgesehen sein, dass ein Teil des Versorgungsnetzes im Oberwagen verläuft und über den Schleifring eine elektrische Verbindung zum Unterwagen realisiert, so dass es im Unterwagen fortgesetzt werden kann.

Vorteilhafterweise wird der Schleifring so ausgestaltet, dass er auch als Power Distribution Box dient. Dies bedeutet, dass der Schleifring als zentrales Element dient und die Anschlussleitungen an die dezentral angeordneten Energiespeicher, die sich über den Ober- und Unterwagen verteilen können, alle annähernd dieselben Leitungswiderstände aufweisen (So kann vorgesehen sein, dass die Leitungswiderstände in einem Bereich von 5% um den größten Leistungswiderstand variieren können). Hierdurch kann das Balancing zwischen den dezentral angeordneten Energiespeichern auf ein Minimum reduziert werden. Vorteil hieran ist, dass die Akkus gleichmäßig entladen werden können, was zu einer Reduzierung der Umladeverluste sowie der thermischen Belastung der Komponenten und letztlich zu einer Reduzierung des Primärenergiebedarfes der Komponenten führt.

Vorteilhafterweise kann der Übergangswiderstand der Bürsten des Schleifringes durch Anpassung der Leiterquerschnitt bzw. Leiterlängen kompensiert werden.

Weiter kann nach der Erfindung vorgesehen sein, dass die Anordnung der Bürsten und Ringe so angepasst ist, dass die Übertragungswiderstände an den Bürsten zu den Ober- und Unterwagenkomponenten identisch sind. Bspw. könnte dies dadurch verwirklicht werden, dass obennragenseitig das Anschlusskabel der HV- Plus Leitung auf eine Bürste und die HV- Minus Leitung auf den Ring geführt wird. Unterwagenseite wäre der Anschluss dann umgekehrt.

Ebenfalls ist es nach der Erfindung vorgesehen, dass ein mit dem Versorgungsnetz in elektrischer Verbindung stehender Energiespeicher dezentral in mehreren Energiespeichereinheiten ausgeführt ist. Dabei steht jede der Energiespeichereinheiten mit dem Versorgungsnetz in Verbindung, so dass ebenfalls daran angeschlossene Verbraucher ihre Energie aus den Energiespeichereinheiten beziehen können. Ein modularer Aufbau der Energiespeichereinheiten gewährleistet, dass dieser entsprechend den zu bewerkstelligenden Arbeitsaufgaben kaskadiert werden kann.

Erfindungsgemäß ist es weiterhin vorgesehen, dass eine oder mehrere der Energiespeichereinheiten in dem Unterwagen und eine oder mehrere andere der Energiespeichereinheiten in dem Oberwagen angeordnet sind und z. B. eine Energiespeichereinheit im Unterwagen an der Befestigungsvorrichtung zum Anbringen eines Raumschilds zusätzlich oder anstelle des Räumschilds befestigt ist.

Insbesondere das Anbringen einer Energiespeichereinheit im Bereich eines normalerweise vorhandenen Räumschilds eines Baggers oder einer mobilen Arbeitsmaschine ist dabei von Vorteil, da eine solche Energiespeichereinheit ohne viel Aufwand getauscht werden kann. So könnte man eine Energiespeichereinheit einfach auf den Boden abstellen, da die mobile Arbeitsmaschine von sich aus heranrangieren kann und mittels der verstellbaren Befestigungsvorrichtung, die eigentlich für das Räumschild vorgesehen ist, den Energiespeicher aufnehmen und mit dem Versorgungsnetz verbinden kann.

Auch durch das Anbringen von Energiespeichereinheiten zwischen den Achsen oder vorn und hinten (z. B. Pratzenkästen) kann die Akkukapazität entsprechend erhöht werden. Ein Austausch der Akkus müsste dann über entsprechende Hilfseinrichtungen oder zusätzliche Fahrzeuge z. B. einen Stapler sichergestellt werden.

Weiter kann nach der Erfindung vorgesehen sein, dass eine der Energiespeichereinheiten an einer zur Arbeitsausrüstung gegenüberliegenden Seite am Oberwagen angebracht ist, um als Energiespeicher und Ballast zu dienen.

Ein Bagger weist typischerweise an seiner zur Arbeitsausrüstung (Baggerausleger) gegenüberliegenden Seite ein Ballastgewicht auf, um ausreichend Traglast und Standsicherheit zu gewährleisten.

Zudem kann nach der Erfindung vorgesehen sein, dass der Energiespeicher durch Hinzuverbinden von Energiespeichereinheiten an das Versorgungsnetz in seiner Kapazität skalierbar ist. Ist es bspw. absehbar, dass der am Oberwagen befindliche Energiespeicher in seiner Kapazität für eine vorgesehene Aufgabe zu klein ist, kann man diesen variabel erweitern, indem man weitere Energiespeichereinheiten mit dem Versorgungsnetz verbindet.

Nach einer weiteren Modifikation der Erfindung kann vorgesehen sein, dass das Drehwerk mit einem elektrischen Drehwerksantrieb betätigbar ist, der seine Energie zum Ausführen einer Drehbewegung des Oberwagens gegenüber dem Unterwagen über das Versorgungsnetz bezieht.

Weiter kann nach einer vorteilhaften Fortbildung der Erfindung vorgesehen sein, dass die Arbeitsmaschine ferner mit einem Leistungsspeicher versehen ist, der mit dem Versorgungsnetz verbunden ist. Der Energiepuffer ist vorzugsweise in Form von Kondensatoren, sogenannten Supercaps, ausgebildet. Ein solcher Leistungsspeicher ist insbesondere dann von Vorteil, wenn hohe Leistungsspitzen in kurzer Zeit und oder mit einer hoher Zyklenzahl gepuffert werden müssen.

Der Leistungsspeicher kann zentral oder dezentral ausgeführt sein. Bei einer dezentralen Ausführung muss im Extremfall für jedes rekuperationsfähiges System ein Leistungsspeicher vorgesehen werden.

Wird der Leistungsspeicher zentral ausgeführt, werden im Extremfall nur über einen Speicher alle rekuperationsfähigen Systeme zwischengepuffert. Dies ermöglicht es auch unter wirtschaftlichen Gesichtspunkten geringe oder selten auftretende Leistungsspitzen zu nutzen.

Werden die Leistungsspeicher dezentral angeordnet, belasten bzw. beeinflussen die rekuperierenden Energiespitzen der Teilsysteme keine anderen Systeme. Das heißt, es ergeben sich keine Leistungs-, Strom- oder Spannungsspitzen auf dem geräteseitigen Verteilungsnetz. Durch die dezentrale Anordnung der Leistungsspeicher kann die Lade- und Endladestrategie der Speicher optimal ausgeführt werden. Das System wird dadurch stabil und es kommt nur zu geringen Schwankungen im Versorgungsnetz.

Nach der Erfindung kann ferner vorgesehen sein, dass die Arbeitsmaschine mit einem elektrischen Fahrantrieb versehen ist, der seine Energie über das Versorgungsnetz bezieht. Der Fahrantrieb kann hierbei über zusätzliche Energie- oder Leistungsspeicher und geeignete Einrichtungen zur Anpassung der Motordrehzahl verfügen. Ferner kann vorgesehen sein, dass der elektrische Fahrantrieb im Unterwagen angeordnet ist.

Nach der Erfindung kann ferner vorgesehen sein, dass die Arbeitsmaschine mit mindestens einem elektrischen Antrieb für die Betätigung der Arbeitseinrichtung versehen ist, wobei der mindestens eine elektrische Antrieb seine Energie über das Versorgungsnetz bezieht. Der Antrieb der Hydraulikaggregate kann hierbei über zusätzliche Energie- oder Leistungsspeicher und geeignete Einrichtungen zur Anpassung der Motordrehzahl verfügen. Dabei kann vorgesehen sein, dass der elektrische Antrieb für die Betätigung der Arbeitseinrichtung im Oberwagen angeordnet ist.

Nach der Erfindung kann ferner vorgesehen sein, dass die Arbeitsmaschine mit einem elektrischen Drehantrieb versehen ist, der seine Energie über das Versorgungsnetz bezieht. Über den Drehantrieb, kann der Oberwagen zum Unterwagen geschwenkt werden. Der Drehantrieb kann hierbei über zusätzliche Energie- oder Leistungsspeicher und geeignete Einrichtungen zur Anpassung der Motordrehzahl verfügen.

Nach der Erfindung kann ferner vorgesehen sein, dass die Arbeitsmaschine mit mindestens einem elektrischen Subsystem versehen ist, das seine Energie über das Versorgungsnetz bezieht, wobei vorzugsweise die Systeme zur Fahrerarbeitsplatz-Klimatisierung, Öl-Temperierung, Kühlwasser-Temperierung bzw. Kühlwasser-Klimatisierung und zur Belüftung direkt an das Versorgungsnetz angeschlossen werden. Hierbei kann auf effiziente Art und Weise die Nutzung von Abwärme umgesetzt werden, was zu einem verbesserten Thermomanagement der Arbeitsmaschine führt.

Um weitere Einsparpotentiale zu heben, können auch die Systeme zur Abstützung, Lenkung und Bremsung des Fahrzeuges über eigenständige am Versorgungsnetz angeschlossene Antriebe bzw. Aktuatoren verfügen.

Aus wirtschaftlichen und technischen Gründen (Abmessungen, Teileverfügbarkeit), ist es erforderlich verschiedene Spannungsniveaus auf dem Gerät zu schaffen. Zur Anpassung des Spannungsniveaus können DC/DC Wandler eingesetzt werden.

Um zusätzliche Energiespeichereinheiten, die einen anderen Ladezustand wie das Basisgerät (Basisakku) aufweisen, einsetzen zu können, müssen die Spannungsniveaus angepasst werden. Dies ist z. B. durch sogenannte DC/DC Wandler möglich. Hierdurch können zusätzliche Akkus bzw. Energiequellen an das Basisgerät angeschlossen werden, auch wenn bei diesem die Energiespeicher erschöpft sind, ohne dass die vorhandenen Energiespeicher zunächst geladen werden müssen.

Um Umladeströme zu vermeiden oder möglichst gering zu halten, kann es sinnvoll sein, den Basisakku mit einem DC/DC Wandler oder einer Abschalteinrichtung vom Versorgungsnetz zu trennen. Nachdem die Akkus bzw. Energiequellen gleiche oder sehr ähnliche Ladezustände erreicht haben kann der Basisakku wieder an das Versorgungsnetz zugeschaltet und weiter genutzt werden.

Weitere Merkmale, Einzelheiten und Vorteile der Erfindung werden anhand der nachfolgenden Figurenbeschreibung ersichtlich. Dabei zeigen:
- Fig. 1:: einen schematischen Grundaufbau der erfindungsgemäßen Arbeitsvorrichtung.
- Fig. 2a&b:: eine schematische Ansicht von Ober- bzw. Unterwagen, bei dem der Schleifring als Power Distribution Unit verwendet wird,
- Fig. 3:: einen Oberwagen einer erfindungsgemäßen Arbeitsmaschine, und
- Fig. 4a&b:: einen Unterwagen einer erfindungsgemäßen Arbeitsmaschine.

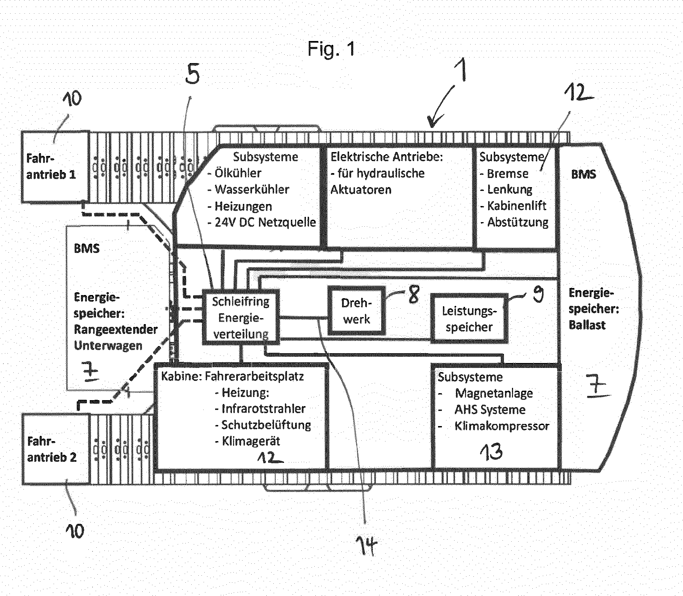

Fig. 1 zeigt einen schematischen Grundaufbau einer erfindungsgemäßen Arbeitsmaschine 1. Das mittig angeordnete Kreuz steht dabei für den Schleifring 5, also die drehbare elektrische Verbindung von Oberwagen und Unterwagen. Das davon abgehende Versorgungsnetz 6 ist einmal mit einer durchgehenden Linie charakterisiert, die den Verlauf des Versorgungsnetzes 6 im Oberwagen darstellt. Die vom Schleifring abgehende gepunktete Linie steht dabei für den Verlauf des Versorgungsnetzes 6 im Unterwagen. Man erkennt, dass mit dem Versorgungsnetz 6 sowohl Komponenten im Unterwagen wie auch im Oberwagen verbunden sind und sich das Versorgungsnetz 6 durch den Schleifring 5 erstreckt.

Vorliegend ist eine Energiespeichereinheit 7 wie auch ein Fahrantrieb 10 im Unterwagen vorgesehen, die jeweils mit dem Versorgungsnetz 6 in Verbindung stehen. Der im Unterwagen angeordnete Fahrantrieb 10 bezieht seine Energie jedoch nicht nur aus der Energiespeichereinheit 7, die im Unterwagen angeordnet ist, sondern auch von der im Oberwagen angeordneten Energiespeichereinheit 7.

Darüber hinaus ist im Oberwagen auch ein z. B. elektrischer Drehwerksantrieb 8 zum Rotieren des Oberwagens 5 angeordnet, der seine Energie über das Versorgungsnetz 6 bezieht.

Daneben gibt es im Oberwagen weitere elektrische Verbraucher, die an das Versorgungsnetz 6 angeschlossen sind. So ist auch ein oder mehrere elektrische Antriebe 11 für die Arbeitshydraulik der Ausrüstung der Arbeitsmaschine 1, bspw. ein Baggerarm oder dergleichen, mit dem Versorgungsnetz 6 in Verbindung. Als weitere Verbraucher kommen eine elektrische Bremse, eine Lenkung, ein Kabinenlift, die Abstützung der Arbeitsmaschine (mittels Pratzen und / oder Räumschilds) oder auch ein Ölkühler und ggf. Wasserkühler in Frage.

Einrichtungen zur Heizung und Klimatisierung des Fahrerarbeitsplatzes können ebenfalls mit Energie über das Versorgungsnetz 6 versorgt werden. In vorteilhafter Erweiterung kann die Heizung durch Nutzung von Abwärme der Antriebskomponenten oder Energiespeicher erfolgen. Durch Einsatz einer Wärmepumpe könnte der Wirkungsgrad des Klimatisierungssystems nochmals gesteigert werden und somit der Einsatz von Primärenergie nochmals verringert werden.

Vorteilhafterweise wird die im Oberwagen angeordnete Energiespeichereinheit an der zur Arbeitsausrüstung gegenüberliegenden Seite des Oberwagens angeordnet, damit diese auch gleichzeitig als Ballast wirkt und der normalerweise vorhandene Ballast nicht oder nur in verringertem Maße erforderlich ist.

Weiter kann man der Fig. 1 entnehmen, dass im Oberwagen ein Leistungsspeicher 9, ein sogenannter Supercap, vorhanden ist, der dazu ausgelegt ist, eine große Menge an Energie in kurzer Zeit aufzunehmen und diese für einen kurzen Zeitraum zu speichern (beispielsweise ca. 30 Sekunden bis 2 Minuten). In vorteilhafter Erweiterung kann dieser als zentraler Speicher für alle Systeme angeordnet werden.

Zum Beispiel kann der Leistungsspeicher 9 nicht nur an das Versorgungsnetz 6 angebunden werden, sondern besitzt darüber hinaus auch noch je eine weitere Verbindung 14 zu dem Drehwerkantrieb 8 und dem Antrieb oder den) Antrieben 11 für die Arbeitsausrüstung.

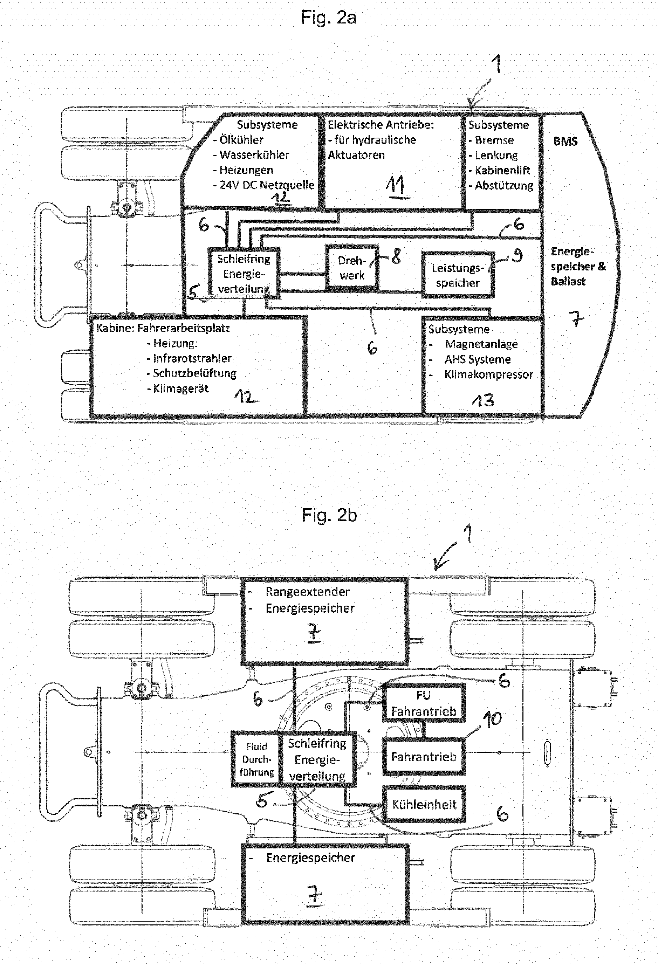

Fig. 2a und 2b zeigt eine leicht abgeänderte Variante des schematischen Aufbaus der Arbeitsmaschine 1, bei der die elektrischen Komponenten (z. B. FU) und Energiespeicher über den Schleifring zum Versorgungsnetz verbunden werden. Der Schleifring weist eine Verbindung zu mindestens einer Energiespeichereinheit 7 auf. Die Anordnung stellt sicher, dass die Leitungswiderstände zwischen den Energiespeichereinheiten in einem tolerierbaren Bereich gehalten werden können.

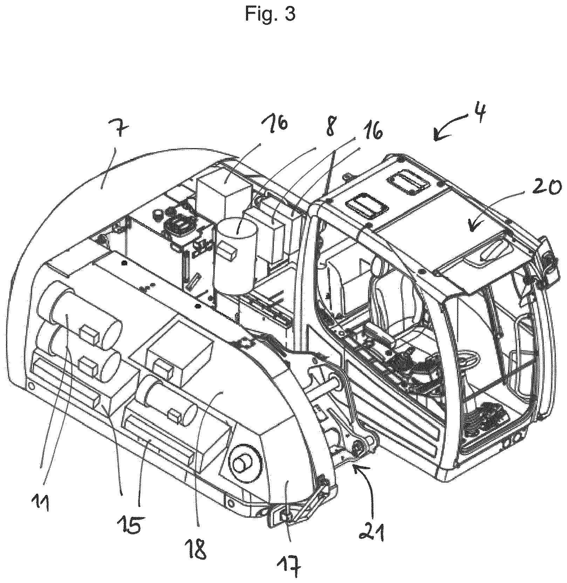

Fig. 2a zeigt dabei den strukturellen Aufbau in einem Oberwagen der mobilen Arbeitsmaschine, wohingegen Fig. 2b den strukturellen Aufbau in einem Unterwagen der Arbeitsmaschine zeigt. Fig. 3 zeigt einen Oberwagen 4 einer elektrischen Arbeitsmaschine, bspw. einen batteriebetriebenen Bagger. Darin sind schematisch die einzelnen elektrischen Verbraucher des Oberwagens gezeigt.

Man erkennt eine Fahrerkabine 20, von der aus ein Bediener die Arbeitsmaschine steuern kann. Daneben ist mit dem Bezugszeichen 21 ein Verbindungsabschnitt für einen Baggerarm oder eine andere Arbeitsausrüstung der Arbeitsmaschine gekennzeichnet, das von einer Seite des Oberwagens absteht.

Gegenüberliegend zu eben jener Seite, an der die Arbeitsausrüstung der Arbeitsmaschine angebracht ist, kann ein Energiespeicher 7 angeordnet sein, der aufgrund seines Gewichts gleichzeitig auch als Teil des Ballast für die Arbeitsmaschine dient.

Zudem ist in dem Oberwagen 4 der elektrische Drehwerksantrieb 8, die Antriebe 11 für die Arbeitsausrüstung, Umrichtereinheiten 15 für die elektrischen Antriebe, Wandlereinheiten 16 zur Erzeugung von Bordnetzspannungen von 24 V, 48 V oder AC 230/400 V und das Kühl- und Heizsystem 17 vorhanden. Mit dem Bezugszeichen 18 ist eine zusätzliche Installationsebene für weitere Verbraucher vorhanden.

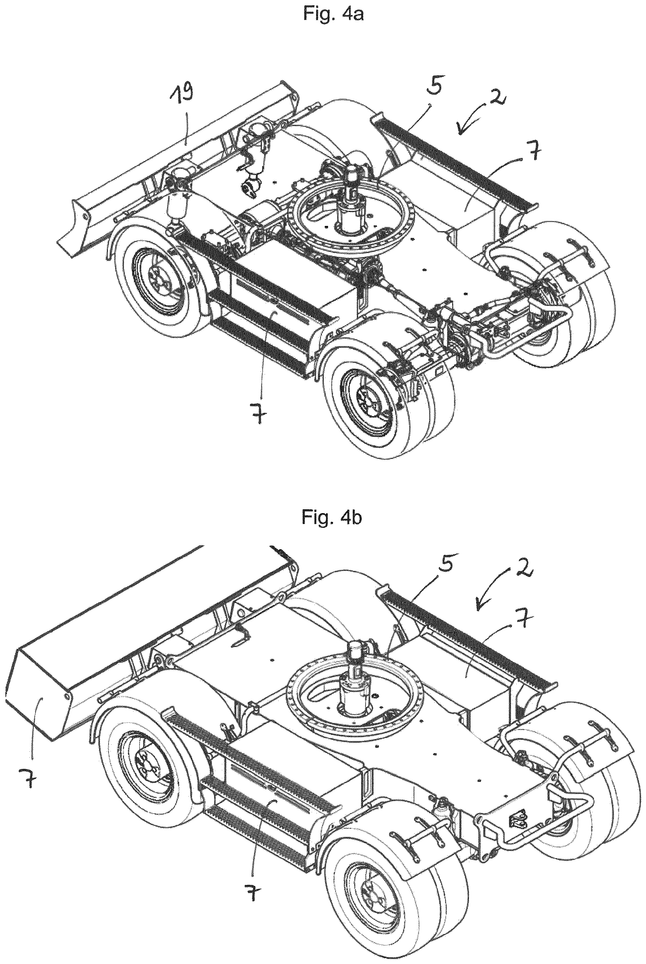

Fig. 4a zeigt eine Perspektivansicht eines Unterwagens 2, zentral eingebaut ist die fluidische Drehdurchführung und der Schleifring zur Übertragung der Steuersignale 5. Ferner erkennt man die am Unterwagen 2 angeordneten Rangeextendermodule, Lademodule oder Plug- In- Module z. B. Energiespeichereinheiten 7 sowie das in Fahrtrichtung vorne angeordnete Räumschild 19.

Fig. 4b zeigt den Unterwagen 2, wie er anstelle des Räumschilds 19 nun eine weitere Energiespeichereinheit 7 vorhält, die die zur Verfügung stehende Energiekapazität erhöht. Daher kann dieser wahlweise anschließbare Energiespeicher 7. Dabei kann vorgesehen sein, dass das Aufnehmen dieser Energiespeichereinheit mittels der Bewegungsvorrichtung geschieht, die auch dazu geeignet ist, das Räumschild zu betätigen. So ist es nicht erforderlich, die Range-Extender-Energiespeichereinheit mittels Kran oder dergleichen anzuheben, da der erforderliche Hebevorgang weg vom Boden durch die bereits an der Arbeitsmaschine (bzw. am Bagger) vorhandene Betätigungsvorrichtung für das Räumschild erfolgen kann.

## Patentansprüche

1. Mobile Arbeitsmaschine (1), insbesondere ein Bagger, umfassend:
einen Unterwagen (2) mit einem Ketten-, Schienen- oder Radfahrwerk (3),
einen Oberwagen (4) mit einer daran befestigten Arbeitsausrüstung,
einen Drehkranz (5), der Unterwagen (2) und Oberwagen (4) zueinander rotierbar verbindet, und
eine dezentrale Energieversorgung und/oder ein dezentrales Versorgungsnetz (6), vorzugsweise ein DC- Versorgungsnetz,
einen Schleifring (5) zum Übertragen von elektrischer Energie zwischen Oberwagen (4) und Unterwagen (2), **gekennzeichnet durch**
ein mit dem Schleifring (5) in elektrischer Verbindung stehender Energiespeicher (7), der dezentral in mehreren Energiespeichereinheiten (7) ausgeführt ist, wobei
eine der Energiespeichereinheiten (7) in dem Unterwagen (2) und eine andere der Energiespeichereinheiten (7) in dem Oberwagen (4) angeordnet ist.

2. Arbeitsmaschine (1) nach Anspruch 1, wobei ein Teil des Versorgungsnetzes im Oberwagen (4) verläuft und über den Schleifring (5) eine elektrische Verbindung zum Unterwagen (2) realisiert, so dass das Versorgungsnetz im Unterwagen (2) fortgesetzt werden kann.

3. Arbeitsmaschine (1) nach einem der vorhergehenden Ansprüche, wobei Anschlussleitungen an die dezentral angeordneten Energiespeicher alle annähernd dieselben Leitungswiderstände aufweisen.

4. Arbeitsmaschine (1) nach einem der vorhergehenden Ansprüche, wobei eine Energiespeichereinheit (7) im Unterwagen (2) an der Befestigungsvorrichtung zum Anbringen eines Räumschilds und/oder anstelle des Räumschilds befestigt ist.

5. Arbeitsmaschine (1) nach einem der vorhergehenden Ansprüche, wobei eine der Energiespeichereinheiten (7) an einer zur Arbeitsausrüstung gegenüberliegenden Seite am Oberwagen (4) angebracht ist, um als Ballast zu dienen.

6. Arbeitsmaschine (1) nach einem der vorhergehenden Ansprüche, wobei der Energiespeicher (7) durch Hinzuverbinden von Energiespeichereinheiten (7) an das Versorgungsnetz (6) in seiner Kapazität skalierbar ist.

7. Arbeitsmaschine (1) nach einem der vorhergehenden Ansprüche, wobei ein Drehwerk der mobilen Arbeitsmaschine mit einem elektrischen Drehwerksantrieb (8) betätigbar ist, der seine Energie zum Ausführen einer Drehbewegung des Oberwagens (4) gegenüber dem Unterwagen (2) über das Versorgungsnetz (6) bezieht.

8. Arbeitsmaschine (1) nach einem der vorhergehenden Ansprüche, ferner mit einem Leistungsspeicher (9), der mit dem Versorgungsnetz (6) verbunden ist und vorzugsweise in Form von Kondensatoren, sogenannten Supercaps, ausgebildet ist.

9. Arbeitsmaschine (1) nach dem vorhergehenden Anspruch 8, wobei der Leistungsspeicher (9) dezentral ausgeführt ist, vorzugsweise wobei für eine Vielzahl von oder jedes rekuperationsfähige System ein eigener Leistungsspeicher (9) vorgesehen ist.

10. Arbeitsmaschine (1) nach einem der vorhergehenden Ansprüche, ferner mit einem vorzugsweise im Unterwagen (2) angeordneten elektrischen Fahrantrieb (10), der seine Energie über das Versorgungsnetz (6) bezieht.

11. Arbeitsmaschine (1) nach einem der vorhergehenden Ansprüche, ferner mit mindestens einem elektrischen Antrieb (11) für die Betätigung der Arbeitseinrichtung, wobei der mindestens eine elektrische Antrieb (11) seine Energie über das Versorgungsnetz (6) bezieht.

12. Arbeitsmaschine (1) nach einem der vorhergehenden Ansprüche, ferner mit mindestens einem elektrischen Subsystem (12), das seine Energie über das Versorgungsnetz (6) bezieht, wobei vorzugsweise das mindestens eine elektrische Subsystem ein Hydraulikölkühler, eine Heiz-Klimaeinrichtung, eine Feststell- und Fahrbremse, ein Unterwagen-Abstützsystem, eine Lenkung und/oder einen Kabinenlift ist.

13. Arbeitsmaschine (1) nach einem der vorhergehenden Ansprüche 1 - 9, ferner mit einem im Unterwagen (2) angeordneten elektrischen Fahrantrieb (10), der seine Energie über eine Energieverteilungseinheit (13) bezieht, die mit dem Energiespeicher (7), vorzugsweise einer im Unterwagen (2) angeordneten Energiespeichereinheit (7), in Verbindung steht.

14. Arbeitsmaschine (1) nach einem der vorhergehenden Ansprüche 1 - 9 oder 13, ferner mit mindestens einem elektrischen Antrieb (11) für die Betätigung der Arbeitseinrichtung, wobei der mindestens eine elektrische Antrieb (11) seine Energie über eine Energieverteilungseinheit (13) bezieht, die mit dem Energiespeicher (7), vorzugsweise einer im Oberwagen (4) angeordneten Energiespeichereinheit (7), in Verbindung steht.

15. Arbeitsmaschine (1) nach einem der vorhergehenden Ansprüche 1 - 9, 13 oder 14, ferner mit mindestens einem elektrischen Subsystem (12), das seine Energie über eine Energieverteilungseinheit (13) bezieht, die mit dem Energiespeicher (7), vorzugsweise einer im Oberwagen (4) angeordneten Energiespeichereinheit (7), in Verbindung steht, wobei vorzugsweise das mindestens eine elektrische Subsystem (12) ein Hydraulikölkühler, eine Heiz-Klimaeinrichtung, eine Feststell- und Fahrbremse, ein Unterwagen-Abstützsystem, eine Lenkung und/oder einen Kabinenlift ist.

## Claims

1. Mobile work machine (1), in particular an excavator, comprising:
an undercarriage (2) having a chain, rail or wheel chassis (3),
an upper structure (4) having work equipment attached thereto,
a slewing ring (5) connecting the undercarriage (2) and the upper structure (4) so as to be rotatable relative to each other, and
a decentralised power supply and/or a decentralised power supply network (6), preferably a DC power supply network,
a slip ring (5) for transmitting electrical energy between the upper structure (4) and the undercarriage (2), **characterised by**
an energy storage (7) in electrical connection with the slip ring (5), which is configured to be decentralised into several energy storage units (7), wherein
one of the energy storage units (7) is arranged in the undercarriage (2) and another of the energy storage units (7) is arranged in the upper structure (4).

2. Work machine (1) according to claim 1, wherein part of the supply network extends in the upper structure (4) and implements an electrical connection to the undercarriage (2) via the slip ring (5), so that the supply network can be continued in the undercarriage (2).

3. Work machine (1) according to any one of the preceding claims, wherein the connection lines to the decentrally arranged energy storages all have approximately the same line resistances.

4. Work machine (1) according to any one of the preceding claims, wherein an energy storage unit (7) is fixed in the undercarriage (2) to the fixing device for attaching a clearing blade and/or instead of the clearing blade.

5. Work machine (1) according to any one of the preceding claims, wherein one of the energy storage units (7) is attached to the upper structure (4) on a side opposite the work equipment in order to serve as a ballast.

6. Work machine (1) according to any one of the preceding claims, wherein the energy storage (7) is scalable in terms of its capacity by connecting further energy storage units (7) to the supply network (6).

7. Work machine (1) according to any one of the preceding claims, wherein a slewing gear of the mobile work machine is operable by an electric slewing gear drive (8) which obtains its energy to execute a rotational movement of the upper structure (4) relative to the undercarriage (2) via the supply network (6).

8. Work machine (1) according to any one of the preceding claims, further comprising a power storage (9) connected to the supply network (6) and preferably configured in the form of capacitors, so-called supercapacitors.

9. Work machine (1) according to claim 8, wherein the power storage (9) is configured to be decentralised, preferably wherein a dedicated power storage (9) is provided for a plurality of or each system capable of recovery.

10. Work machine (1) according to any one of the preceding claims, further comprising an electric traction drive (10), preferably arranged in the undercarriage (2), which obtains its energy via the supply network (6).

11. Work machine (1) according to any one of the preceding claims, further comprising at least one electric drive (11) for actuating the work device, wherein the at least one electric drive (11) obtains its energy via the supply network (6).

12. Work machine (1) according to any one of the preceding claims, further comprising at least one electrical subsystem (12) which obtains its energy via the supply network (6), wherein preferably the at least one electrical subsystem is a hydraulic oil cooler, a heating and air conditioning device, a parking and travel brake, an undercarriage support system, a steering and/or a cab lift.

13. Work machine (1) according to any one of the preceding claims 1 - 9, further comprising an electric traction drive (10) arranged in the undercarriage (2), which obtains its energy via an energy distribution unit (13) connected to the energy storage (7), preferably an energy storage unit (7) arranged in the undercarriage (2).

14. Work machine (1) according to any one of the preceding claims 1 - 9 or 13, further comprising at least one electric drive (11) for actuating the work device, wherein the at least one electric drive (11) obtains its energy via an energy distribution unit (13) which is in connection with the energy storage (7), preferably an energy storage unit (7) arranged in the upper structure (4).

15. Work machine (1) according to any one of the preceding claims 1 - 9, 13 or 14, further comprising at least one electrical subsystem (12) which obtains its energy via an energy distribution unit (13) which is in connection with the energy storage (7), preferably an energy storage unit (7) arranged in the upper structure (4), wherein preferably the at least one electrical subsystem (12) is a hydraulic oil cooler, a heating and air conditioning device, a parking and travel brake, an undercarriage support system, a steering and/or a cab lift.

## Revendications

1. Machine de travail mobile (1), notamment une excavatrice, comprenant :
un châssis inférieur (2) avec un train de roulement à chaînes, à rails ou à roues (3),
un châssis supérieur (4) avec un équipement de travail qui y est fixé,
une couronne de rotation (5) qui relie le châssis inférieur (2) et le châssis supérieur (4) de manière à ce qu'ils puissent tourner l'un par rapport à l'autre, et
une alimentation en énergie décentralisée et/ou un réseau d'alimentation décentralisé (6), de préférence un réseau d'alimentation CC,
une bague collectrice (5) pour la transmission d'énergie électrique entre le châssis supérieur (4) et le châssis inférieur (2), **caractérisée par**
un accumulateur d'énergie (7) en liaison électrique avec la bague collectrice (5), qui est réalisé de manière décentralisée en plusieurs unités d'accumulation d'énergie (7),
l'une des unités d'accumulation d'énergie (7) étant agencée dans le châssis inférieur (2) et une autre des unités d'accumulation d'énergie (7) étant agencée dans le châssis supérieur (4).

2. Machine de travail (1) selon la revendication 1, dans laquelle une partie du réseau d'alimentation passe dans le châssis supérieur (4) et réalise une liaison électrique avec le châssis inférieur (2) par l'intermédiaire de la bague collectrice (5), de telle sorte que le réseau d'alimentation peut être poursuivi dans le châssis inférieur (2).

3. Machine de travail (1) selon l'une quelconque des revendications précédentes, dans laquelle les lignes de raccordement aux accumulateurs d'énergie agencés de manière décentralisée présentent toutes approximativement les mêmes résistances de ligne.

4. Machine de travail (1) selon l'une quelconque des revendications précédentes, dans laquelle une unité d'accumulation d'énergie (7) est fixée dans le châssis inférieur (2) au dispositif de fixation pour la mise en place d'une lame de déblayage et/ou à la place de la lame de déblayage.

5. Machine de travail (1) selon l'une quelconque des revendications précédentes, dans laquelle l'une des unités d'accumulation d'énergie (7) est montée sur le châssis supérieur (4) sur un côté opposé à l'équipement de travail, afin de servir de lest.

6. Machine de travail (1) selon l'une quelconque des revendications précédentes, dans laquelle la capacité de l'accumulateur d'énergie (7) est évolutive en connectant des unités d'accumulation d'Energie (7) au réseau d'alimentation (6).

7. Machine de travail (1) selon l'une quelconque des revendications précédentes, dans laquelle un mécanisme de rotation de la machine de travail mobile peut être actionné par un entraînement électrique de mécanisme de rotation (8), qui obtient son énergie pour effectuer un mouvement de rotation du châssis supérieur (4) par rapport au châssis inférieur (2) par l'intermédiaire du réseau d'alimentation (6).

8. Machine de travail (1) selon l'une quelconque des revendications précédentes, en outre avec un accumulateur de puissance (9) qui est relié au réseau d'alimentation (6) et qui est de préférence configuré sous forme de condensateurs, dits supercondensateurs.

9. Machine de travail (1) selon la revendication 8 précédente, dans laquelle l'accumulateur de puissance (9) est réalisé de manière décentralisé, de préférence dans laquelle un accumulateur de puissance (9) propre est prévu pour une pluralité de ou chaque système apte à la récupération.

10. Machine de travail (1) selon l'une quelconque des revendications précédentes, en outre avec un entraînement électrique de déplacement (10), de préférence agencé dans le châssis inférieur (2), qui obtient son énergie par l'intermédiaire du réseau d'alimentation (6).

11. Machine de travail (1) selon l'une quelconque des revendications précédentes, en outre avec au moins un entraînement électrique (11) pour l'actionnement de l'appareil de travail, l'au moins un entraînement électrique (11) obtenant son énergie par l'intermédiaire du réseau d'alimentation (6).

12. Machine de travail (1) selon l'une quelconque des revendications précédentes, en outre avec au moins un sous-système électrique (12) qui obtient son énergie par l'intermédiaire du réseau d'alimentation (6), l'au moins un sous-système électrique étant de préférence un refroidisseur d'huile hydraulique, un dispositif de chauffage et de climatisation, un frein de stationnement et de déplacement, un système de support du châssis inférieur, une direction et/ou un élévateur de cabine.

13. Machine de travail (1) selon l'une quelconque des revendications 1 à 9 précédentes, en outre avec un entraînement électrique de déplacement (10) agencé dans le châssis inférieur (2), qui obtient son énergie par l'intermédiaire d'une unité de distribution d'énergie (13), qui est en liaison avec l'accumulateur d'énergie (7), de préférence une unité d'accumulation d'énergie (7) agencée dans le châssis inférieur (2).

14. Machine de travail (1) selon l'une quelconque des revendications 1 à 9 ou 13 précédentes, en outre avec au moins un entraînement électrique (11) pour l'actionnement de l'appareil de travail, l'au moins un entraînement électrique (11) obtenant son énergie par l'intermédiaire d'une unité de distribution d'énergie (13) qui est en liaison avec l'accumulateur d'énergie (7), de préférence une unité d'accumulation d'énergie (7) agencée dans le châssis supérieur (4).

15. Machine de travail (1) selon l'une quelconque des revendications 1 à 9, 13 ou 14 précédentes, en outre avec au moins un sous-système électrique (12) qui obtient son énergie par l'intermédiaire d'une unité de distribution d'énergie (13) qui est en liaison avec l'accumulateur d'énergie (7), de préférence une unité d'accumulation d'énergie (7) agencée dans le châssis supérieur (4), l'au moins un sous-système électrique (12) étant de préférence un refroidisseur d'huile hydraulique, un dispositif de chauffage et de climatisation, un frein de stationnement et de déplacement, un système de support du châssis inférieur, une direction et/ou un élévateur de cabine.
